# EUROPÄISCHE PATENTSCHRIFT

(11) **EP 0 730 141 B1**
(45) Veröffentlichungstag und Bekanntmachung des Hinweises auf die Patenterteilung: **30.01.2002**
(21) Anmeldenummer: 96103016.0
(22) Anmeldetag: 29.02.1996
(51) Int. Cl.: G01M 17/02

(54) **Vorrichtung zur Prüfung von ungleichförmigem Abrieb am Laufstreifen eines Fahrzeugreifens**
Device for testing for non-uniform wear of vehicle tyre tread
Dispositif d'essai d'usure non-uniforme de la bande de roulement de pneumatiques de véhicule

(30) Priorität: 03.03.1995 DE 19507441
(43) Veröffentlichungstag der Anmeldung: 04.09.1996
(73) Patentinhaber: Uniroyal Englebert Reifen GmbH, D-52005 Aachen (DE)
(72) Erfinder: Gerhards, Bernard, D-52078 Aachen (DE); Krutt, Hans-Jürgen, D-52156 Monschau (DE); Thissen, Wilhelm, D-52222 Stolberg (DE)

(56) Entgegenhaltungen:
- DE-A- 2 233 319
- DE-A- 2 611 123
- DE-A- 2 831 978
- US-A- 3 604 245
- US-A- 3 726 124
- US-A- 4 489 598
- US-A- 4 736 546
- US-A- 4 848 143

## Beschreibung

Die Erfindung betrifft eine Vorrichtung zur Prüfung von ungleichförmigem Abrieb am Laufstreifen eines Fahrzeugreifens. Zur Feststellung und Überprüfung der Qualität sowie des Betriebverhaltens von Fahrzeugreifen ist es üblich, umfangreiche Tests und Beobachtungen der Fahrzeugreifen an Fahrzeugen im Straßenbetrieb durchzuführen. Derartige Tests sind sehr zeitaufwendig und aufgrund der unterschiedlichen schwer voneinander zu trennenden, sich teils überschneidenden Einflüsse nur bedingt und mit großem Aufwand hinsichtlich einzelner interessierender Parameter auszuwerten. Zur konkreten Untersuchung von Eigenschaften und vom Verhalten eines Reifens unter bestimmten vorgebenen Bedingungen zum besseren Verständnis der Einflüsse auf den Fahrzeugreifen und des Verhaltens des Fahrzeugreifens, sowie hierdurch ableitbarer Verbesserungen hinsichtlich der Reifenqualität werden Reifen außerdem in speziellen Prüfständen, beispielsweise zur Ermittlung des Rollwiderstandes oder zur Ermittlung der Belastbarkeit während des Dauerlaufs überprüft. Sowohl die Prüfstände zur Ermittlung des Rollwiderstandes als auch die zur Überprüfung der Dauerbelastbarkeit sind dabei derart ausgebildet, daß die Ermittlung möglicherweise störendes Abriebsverhalten des Fahrzeugreifens möglichst minimiert wird. Üblicherweise werden derartige Prüfstände mit einer starren, drehbaren Aufnahme für ein Fahrzeugrad ausgebildet, das zur Prüfung gegen eine möglichst glatte, üblicherweise eine geschliffene Stahloberfläche einer drehbaren Walze, gedrückt wird. Für Rollwiderstandsmessungen sind in der starren Radaufnahme Meßeinrichtungen angeordnet. Entweder Fahrzeugrad oder drehende Walze werden angetrieben. Unter einer genau definierten radial zur Walze ausgerichteten Druckkraft werden Rollwiderstandsmessungen über kurze Zeitdauer hinweg durchgeführt. Aus der Bestimmung der Drehgeschwindigkeit des Reifens und der antreibenden Kräfte wird der Antriebsverlust und der Rollwiderstand ermittelt. Um möglichst eindeutige, zuverlässige Angaben über den Rollwiderstand treffen zu können, muß der Antriebsverlust durch Reibung zwischen Fahrzeugreifen und Walze möglichst eliminiert werden. Auch bei Dauerbelastbarkeitsprüfungen wird die Belastbarkeit aufgrund der im Straßeneinsatz durch den Pkw auf den Reifen wirkenden radialen Druckkräfte und deren Einflüsse auf das Verhalten der Konstruktion des Fahrzeugreifens überprüft, wobei alle zusätzlichen, beispielsweise durch Reibung, auf den Reifen wirkenden Kräfte das Ergebnis stören und verfälschen.

Außer dem Rollwiderstand und der Dauerbelastbarkeit eines Reifens ist die Information des unregelmäßigen Abriebs der Lauffläche an Fahrzeugreifen unter bestimmten vorgegebenen, zu untersuchenden Bedingungen zur Ausgestaltung einer optimierten Lauffläche von zunehmender Bedeutung. Ungleichförmiger Abrieb, sei es an einzelnen Profilblockelementen, sei es über die gesamte Breite oder über die Umfangsrichtung eines Reifens hinweg, haben ein über die Lebensdauer eines Reifens unterschiedliches Geräusch-, Traktions- und Naßgriffverhalten zur Folge. Zur Simulation und Überprüfung von ungleichförmigem Abrieb wurden bereits Prüfstände eingesetzt, bei denen eine rotierende Abriebstrommel mit dünnem Schleifpapier an ihrer Umfangsfläche belegt wurde.

Gegen diese wird ein Fahrzeugreifen von radial außerhalb mit seiner Lauffläche radial nach innen gedrückt. Die Abriebtrommel treibt dabei durch Reibung das drehbar gelagerte Fahrzeugrad an. Der rauhe Belag des Schleifpapiers erzeugt Abrieb, der mit Talkum gebunden und vom Fahrzeugrad abgesaugt wird. Nach längeren Versuchsintervallen kann dann das Abriebsbild des jeweils untersuchten Profils auf Gleichförmigkeit überprüft werden. Derartige Prüfstände haben den Nachteil, daß sich die Rauheit des dünnen Schleifpapiers rasch in unbestimmter Weise verändert. Die Bedingungen für die Erzeugung des Abriebs werden hierdurch schon während des Testlaufes eines Fahrzeugreifens in unbestimmter nicht hinreichend reproduzierbarer Weise verändert. Die Laufbedingungen für mehrere nacheinander getestete Fahrzeugreifen sind ebenso nicht für jeden Reifen identisch einstellbar. Der schnelle Verschleiß des Schleifpapiers macht zudem häufigen Wechsel des Schleifpapiers erforderlich, wodurch die Ungenauigkeiten hinsichtlich der Prüfergebnisse noch verstärkt werden. Ein unbestimmter Wechsel zwischen sehr rauer und undefiniert abgestumpfter Schleifpapieroberfläche des einen Schleifpapiers wird durch die sprunghafte Veränderung zu sehr rauhem neuem Schleifpapier ergänzt. Aufgrund dieser unbestimmten schnell veränderten Oberflächenbeschaffenheit ist die Qualität der Meßergebnisse auch nur beschränkt zufriedenstellend. Die Meßergebnisse mehrerer nacheinander gemessener Fahrzeugreifen gleicher Bauart unter vermeintlich gleichen Prüfbedingungen führt zu relativ hohen Ergebnisschwankungen. Die ungleichförmigen Prüfbedingungen werden zusätzlich durch die Spaltbereiche, die durch die über die Umfangsfläche der Abriebstrommeln montierten Schleifpapiere, die mit ihren Endbereichen Stoß an Stoß aneinander grenzen, in diesem Straßenbereich entstehen, zusätzlich erhöht. Derartige Spaltbereiche stellen zusätzliche ungewünschte Störstellen im Umfangsbereich der Abriebstrommeln dar. Derartige Spaltbereiche können den Fahrzeugreifen durch geringfügige Stöße zu ungewünschten Schwingungen veranlassen und weisen gegenüber dem Restumfang der Abriebstrommel ein unterschiedliches Abriebverhalten auf.

Aus der US-A-4,848,143 ist ein Reifenprüfstand für Dauerermüdungsversuche bekannt, welcher eine drehbare Aufnahme für ein Fahrzeugrad ausweist, welches zur Prüfung gegen eine drehbare Walze gedrückt wird. Zur Einstellung des Sturz- undloder Schräglaufwinkels des Fahrzeugrades kann die Drehachse des Fahrzeugrades in ihrer räumlichen Lage aus einer Position parallel zur Walze um zumindest eine Schwenkachse, die in einer Ebene senkrecht zur Drehachse des Fahrzeugrades liegt, schwenkbar ausgebildet sein. Zur Prüfung des ungleichförmigen Abriebs am Laufstreifen eines Fahrzeugreifens ist dieser Reifenprüfstand nicht geeignet, da keine Reibbeschichtung an der Walze vorgesehen ist.

Aus der US-A-3,726,124 ist es bekannt, bis zu acht Aufnahmen von Fahrzeugrädern konzentrisch um eine drehbare Walze anzuordnen. Auch hierbei handelt es sich um einen Reifenprüfstand für Dauerermüdungsversuche, bei welchem die Walze keine Reibbeschichtung aufweist und die Winkel der Drehachsen der Fahrzeugräder nicht veränderbar sind.

Aus der DE 26 11 123 A1 ist es bekannt, zum Prüfen des Abriebverlustes von Luftreifen für Kraftfahrzeuge einen Reifen auf einer Stimfläche einer drehenden Scheibe abzurollen. Auch in dieser Entgegenhaltung wird die Scheibe mit Schmirgelpapier, Korundpapier und dergleichen belegt mit den bereits oben dargelegten Nachteilen. Altemativ ist es aus diesem Dokument bekannt, zwischen Reifen und Scheibe ein loses Reibmittel vor dem Reifen einzubringen und hinter dem Reifen wieder abzuführen. Die Zuführung des Reibmittels erfolgt aus einem Vorratsbehälter über eine Einstelldüse, über ein Fall- oder Schüttelrohr auf die Scheibe. Das lose Reibmittel kann u. a. Schmirgel oder Korund sein. Auf diese Weise kann - wenn überhaupt - eine Gleichmäßigkeit der Abriebsbedingungen nur mit sehr hohem Steueraufwand erzielt werden. Ein funktionssicherer Einsatz an einer Abriebtrommel ist selbst bei sehr großem Aufwand kaum denkbar.

Der Erfindung liegt die Aufgabe zugrunde, eine Vorrichtung zur Prüfung von ungleichförmigem Abrieb am Laufstreifen eines Fahrzeugreifens zu schaffen, die genauere Prüfergebnisse ermöglicht.

Erfindungsgemäß wird die Aufgabe durch eine Ausbildung der Vorrichtung zur Prüfung von ungleichförmigem Abrieb am Laufstreifen eines Fahrzeugreifens gemäß den Merkmalen von Anspruch 1 gelöst. Das Fahrzeugrad ist mit seiner Drehachse um eine Achse senkrecht zu seiner Drehachse schwenkbar ausgebildet. Je nach Lage der Schwenkachse in der Ebene senkrecht zur Achse des Fahrzeugrades lassen sich durch Verschwenken an Fahrzeugen übliche Sturzwinkel oder Schräglaufwinkel oder eine Kombination aus Sturz- und Schräglaufwinkel einstellen. Abriebsversuche können somit unter realistischen Bedingungen ausgeführt werden. Durch Ausbildung einer starren Mantelfläche des Reibkörpers über deren gesamte Umfangsfläche hinweg mit einer permanenten, geschlossenen Reibbeschichtung ist die bei bekannten Schleifpapieren übliche nachteilige schnelle Abnutzung des besonders rauhen Belages in einen dort undefinierten Zustand einer besonders glatten Oberfläche bereits wesentlich vergleichmäßigt. Die permanente Reibbeschichtung ermöglicht eine wesentlich bessere Aufrechterhaltung eines vorgegebenen definierten Reibzustandes. Durch die geschlossene Ausbildung über die gesamte Umfangsfläche entfallen Stoßstellen aufgrund von Übergängen bzw. aufgrund von Spalten, die sich aufgrund der stoßweiten Aneinanderfügung von Schleifpapierenden ergeben. Ein Fahrzeugreifen kann bei einer derartigen Vorrichtung über die gesamte Prüfdauer bei im wesentlichen konstanten, definierbaren Bedingungen getestet werden. Folgeaufträge von Fahrzeugreifen können im wesentlichen unter den gleichen definierbaren Prüfbedingungen getestet werden.

Die Prüfergebnisse sind somit im wesentlichen konstant reproduzierbar. Zusätzlich ist es möglich, die Prüfbedingungen dadurch noch besser zu vereinheitlichen, daß die permanente Reibbeschichtung überarbeitbar ausgebildet ist. Obwohl die Veränderung derartig permanenter Reibbeschichtungen im Vergleich zur Veränderung bei dünnen Schleifpapieren sehr gering ausgeprägt sind, sind gering auftretende Veränderungen, die beispielsweise durch Festsetzen von Abriebstaub nach längerem Testlauf auftreten können, durch Überarbeitung in den vorbestimmten Zustand veränderbar. Zur besseren Simulation über einen besonders weiten Bereich von Sturz- und Schräglaufwinkel ist es möglich, die Schwenkachse in ihrer Ebene senkrecht zur Drehachse des Fahrzeugrads durch Verdrehen um die Drehachse zu verstellen.

Vorteilhafterweise wird die Aufnahme des Fahrzeugrades derart ausgebildet, daß sie sowohl um eine Achse zur Einstellung des Sturzwinkels als auch um eine Achse zur Einstellung des Schräglaufwinkels jeweils unabhängig voneinander steuerbar ausgebildet ist. Hierdurch lassen sich realistische Fahrbedingungen für alle Fahrzeugradaufhängungen optimiert und in einfacher Weise simulieren.

Die Anordnung mehrerer erfindungsgemäßer Fahrzeugradaufnahmen über den Umfang des Reibkörpers hinweg ermöglicht die Simulierung des ungleichförmigen Abriebs von mehreren, sogar von unterschiedlichen Fahrzeugreifen, gleichzeitig unter gleichen Simulationsbedingungen. Durch Ausbildung der Fahrzeugradaufnahmen mit unabhängig voneinander steuerbaren Schwenkachsen lassen sich auch unterschiedliche Sturz- und/oder Schräglaufwinkeleinstellungen an den gleichzeitig geprüften Fahrzeugreifen einstellen. Bevorzugt wird eine Vorrichtung mit sechs über den Umfang des Reibkörpers gleichmäßig verteilt angeordneten Fahrzeugradaufnahmen. Hierdurch sind auch vorteilhafte Kombinationen von drei Testreihen mit jeweils zwei gleichen Fahrzeugreifen unter gleichen Prüfbedingungen gleichzeitig möglich, ebenso können zwei Prüfreihen mit jeweils drei Fahrzeugreifen mit gleicher Einstellung getestet werden. Geringfügige Abweichungen in den Abriebbildern können hier durch Mitteln der Ergebnisse der jeweils zwei bzw. drei gleichen gleichzeitig vorgenommen Fahrzeugreifenabriebsprüfungen kompensiert werden. Die sechs gleichmäßig verteilt angeordneten Fahrzeugreifenaufnahmen ermöglichen außerdem eine günstige Verteilung der auf den Reibkörper wirkenden Kräfte sowie eine besonders günstige räumliche Ausnutzung.

Die permanente Reibbeschichtung erfolgt bevorzugt durch Aufstampfen oder durch Aufgießen von Reibmaterial. Bevorzugtes Reibmaterial ist Schmirgelleinen oder Schleifsteinmaterial. Schleifsteinmaterial aus einer Gießharzmatrix mit darin eingebrochenen Korund ermöglicht einen besonders gleichmäßigen, geringfügigen Verschleiß des Reibmaterials.

Bevorzugt wird der Reibkörper mit einem Mantel aus Stahl, der mit Reibmaterial beschichtet ist, ausgebildet.

Reibbeschichtungen zwischen 8 und 12 mm Dicke ermöglichen einerseits eine relativ lange Lebensdauer des Reibbelags ohne jedoch besondere konstruktive Probleme für die Sicherstellung einer konstanten radialen Ausdruckskraft zwischen Fahrzeugreifen und Reibkörper auch bei relativ kleinen Fahrzeugreifen aufzuwerfen.

Durch Nachregeln des eingestellten Sturzwinkels während der Prüfdauer lassen sich bestimmte Sturzprofilbilder simulieren. Hierdurch läßt sich die Sturzveränderung, die sich im Fahrzustand eines Fahrzeugs, beispielsweise bei Belastungswechseln oder bei Fahrwerksymmetrieveränderungen ergeben und ihre Auswirkungen auf die Gleichförmigkeit des Abriebbildes eines Fahrzeugreifens simulieren. Durch die Regelbarkeit des Schräglaufwinkels lassen sich Profilbilder, die an Fahrzeugen im Betrieb bei einem vorbestimmten Kurs mit Kurvenfahrten auftreten, simulieren. Hierdurch kann die Gleichförmigkeit des Abriebverhaltens bei vorbestimmten Kurs überprüft werden.

Durch Regelung der Rotationsgeschwindigkeit des Reibkörpers können vorgegebene Geschwindigkeitsprofile, wie sie einem vorgegebenen Geschwindigkeitswechsel am Fahrzeug entsprechen, simuliert werden.

Die Erfindung wird im folgenden anhand der in den Figuren 1 bis 3 näher dargestellten Ausführungsbeispiele näher erläutert.

Hierin zeigt
- Fig. 1: Querschnittsdarstellung eines erfindungsgemäßen Abriebprüfstands
- Fig. 2: Draufsicht entsprechend der Schnittdarstellung II-II von Fig. 1 auf einen erfindungsgemäßen Abriebprüfstand mit 6 Fahrzeugrädern
- Fig. 3: Schematische Darstellung zur Erläuterung der Schräglaufwinkelverstellung

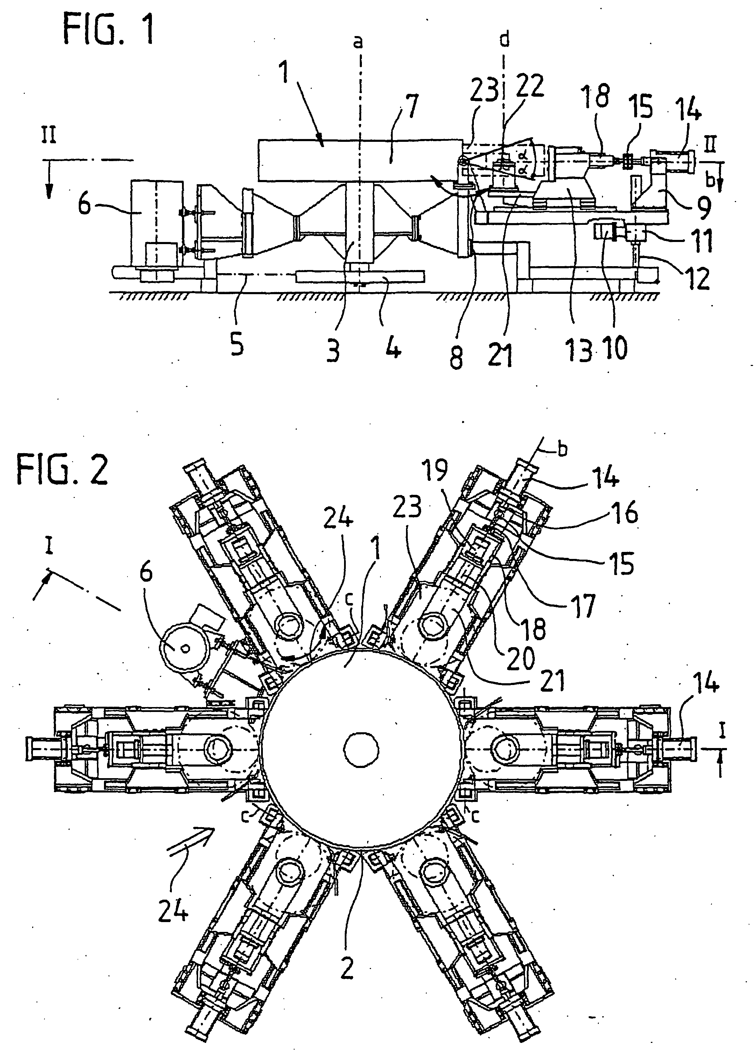

Gemäß der Darstellung in den Figuren 1 und 2 ist der Abriebprüfstand mit einem Zentralkörper 7 ausgebildet, in dem eine Reibtrommel 1 mit ihrer Antriebswelle 3 drehbar gelagert ist, die über eine Antriebswelle 3, ein Treibrad 4, einen Reibriemen 5 von einem Motor 6 in bekannter Weise angetrieben wird. Der Motor 6 ist in seiner Geschwindigkeit einstell- und regelbar ausgebildet. Die Reibtrommel 1 weist einen zylindrischen Mantel aus Stahl auf. Dieser ist über den Umfang hinweg in bekannter Weise mit Schleifsteinmaterial aus im wesentlichen gebrochenem Korund, das in eine Gießharzmatrix eingebettet ist, durch Aufstampfen gleichmäßig beschichtet. Die Beschichtung 2 weist eine gleichmäßige Dicke von 8 bis 12 mm auf. Es ist auch denkbar, ein anderes Schleifsteinmaterial oder Schmirgelleinen zur Beschichtung zu verwenden. Ebenso ist es denkbar, die Beschichtung durch Aufgießen oder durch ein anderes eine permanente Beschichtung erzeugendes geeignetes Verfahren aufzubringen. Am Zentralkörper 7 sind über den Umfang der Reibtrommel hinweg, konzentrisch zur Drehachse a der Abriebstrommel 1 hin ausgerichtet sechs um jeweils eine tangential zur Reibtrommel ausgebildete Achse c schwenkbar gelagerte Schwenkhebel 8 mit daran befestigtem Rahmen 9 gleichmäßig verteilt angeordnet . Im von der Schwenkachse c radial nach außen weisenden Endbereich jedes Schwenkhebels 8 ist eine Spindelmutter 11 drehbar gelagert. In das Innengewinde der Spindelmutter 11 greift von unten nach oben durch die Spindelmutter hindurch reichend eine korrespondierend ausgebildete Spindel 12 ein, die unterhalb der Spindelmutter 11 in einer Fortführung des Zentralkörpers 7 um eine Schwenkachse schwenkbar gelagert ist. Mit Hilfe eines an jedem Schwenkhebel 8 befestigten Elektromotors kann die axial fest gelagerte Spindelmutter 11 um die Spindel 12 herum verdreht werden, wodurch der Schwenkhebel 8 um seine Schwenkachse c verschwenkt wird.

Im radial äußeren Endbereich jedes Schwenkhebels 8 ist dieser nach oben hin als Rahmen 9 ausgebildet. Im Rahmen 9 ist ein Pneumatikzylinder 14 befestigt. Die Hubkolbenstange 16 des Pneumatikzylinders 14 ist radial nach innen in Richtung der Drehachse a des Reibkörpers 1 ausgerichtet und mit Hilfe des gesteuerten Pneumatikzylinders bewegbar. In der Verlängerung der Hubkolbenachse 14 ist eine Kraftmeßdose 15 und ein Rahmen 18 befestigt. Der Rahmen 18 ist in seinem unteren Bereich an einem Schlitten 13 befestigt, der radial zur Achse a des Reibkörpers 1 hin auf dem Schwenkhebel geführt ausgebildet ist. Durch Verstellen des Pneumatikzylinders 14 kann der Rahmen 18 radial in Richtung zur Drehachse a hin oder radial nach außen von dieser wegbewegt werden. Im Rahmen 18 ist ein Drehstrommotor 19 befestigt, der in Antriebsverbindung mit einer Welle 20 steht, die konzentrisch zur Achse des Pneumatikzylinders 14 angeordnet ist, im Rahmen 18 drehbar gelagert ist. An der Welle 20 ist eine schwenkbare Lagerplatte 21 befestigt. Die schwenkbare Lagerplatte 21 weist in ihrem zur Reibtrommel hin weisenden Bereich um eine Achse b drehbar auf der Lagerplatte 21 gelagert einen Radaufnahmekörper 22 auf. Auf diese wird vor Abriebprüfung von oben ein Fahrzeugrad 23 aufgelegt und konzentrisch zur Achse D befestigt. Zur Prüfung des Abriebs eines Fahrzeugrades und zur Simulation von Abrieb bei Fahrbedingungen an einem Fahrzeug ohne Sturz- bzw. Schräglauf eines Fahrzeugrads, d.h. mit Sturz- bzw. Schräglaufwinkeln von O°, wird zunächst der Hebel 8 von der Spindel 12 um die Achse c so weit verschwenkt, daß die Achse des Pneumatikzylinders 14 in einer Ebene senkrecht zur Drehachse a der Abriebstrommel 1 liegt. Mit Hilfe des Drehstrommotors 19 wird die Welle 20, die in dieser Position bereits ebenfalls in einer Ebene parallel zur Achse a liegt, und somit der Radaufnahmekörper 22, soweit verschwenkt, daß die Drehachse d des Fahrzeugrades 23 parallel und nicht windschief zur Drehachse a der Abriebtrommel 1 liegt. Mit Hilfe des Pneumatikzylinders 14 wird das Fahrzeugrad 23 mit seiner Lauffläche radial auf die Abriebtrommel 1 zubewegt bis die Lauffläche den Reibbelag 2 der Abriebtrommel 1 an dessen Umfangsfläche berührt. In einer Feinabstimmung über die Kraftmeßdose 15 wird mit Hilfe des Pneumatikzylinders 14 die vorbestimmte Anpresskraft zwischen Fahrzeugrad 23 und Abriebtrommel 1 eingestellt. Mit Hilfe des Motors 6 wird zur Abriebmessung die Abriebtrommel 1 mit ihrer Reibbeschichtung 2 und über Mitnahme durch Reibung das Fahrzeugrad 23 um seine Achse b angetrieben.

Nach Einreichen der vorgegebenen simulierten Kilometerleistung wird das Fahrzeugrad 23 mit Hilfe des Pneumatikzylinders 14 von der Reibbeschichtung 2 radial nach außen entfernt, von dem Radaufnahmekörper 22 nach oben hin abgenommen und das Abriebsbild der Lauffläche überprüft.

Zur Messung des Abriebs an einem Fahrzeugreifen mit vorbestimmter Sturzeinstellung wird zunächst mit Hilfe des Elektromotors 10, der Spindelmutter 11 und der Spindel 12 der Schwenkhebel 8 soweit verstellt bis die Achse b des Pneumatikzylinders 14 zur Ebene senkrecht zur Drehachse a der Reibtrommel 1 einen Winkel einnimmt, der dem gewünschten Sturzwinkel entspricht. Im Anschluß daran wird das Fahrzeugrad 23 mit Hilfe des Pneumatikzylinders 14 in Berührung mit der Reibbeschichtung 2 gebracht und mit vorgegebenem Anpressdruck beaufschlagt.

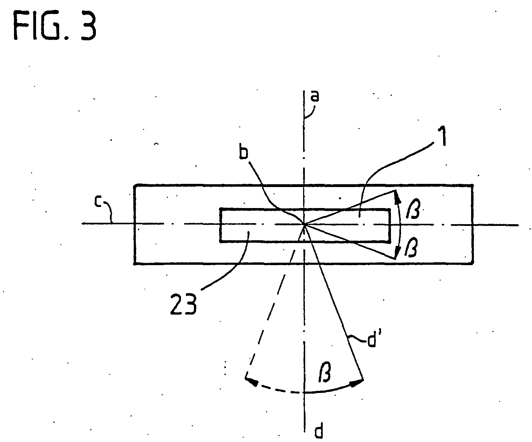

Zur Überprüfung des ungleichmäßigen Abriebverhaltens einer Lauffläche an einem Fahrzeugrad mit vorgegebenem Schräglauf wird mit Hilfe des Drehstrommotors 19 die Welle 20 und somit die schwenkbare Lagerplatte 21 mit dem Radaufnahmekörper 22 aus ihrer Grundposition, die sie bei Messung ohne Sturz und ohne Schräglauf einnimmt, um die Achse b der Welle 20 verschwenkt. Die Drehachse d des Fahrzeugrades wandert dabei um einen Winkel β in eine Position d', wie in Fig. 3 dargestellt ist. wandert. Die Verschwenkung erfolgt so lange bis β dem Wert des gewünschten Schräglaufwinkels entspricht. Im Anschluß daran wird das Fahrzeugrad mit Hilfe des Pneumatikzylinders in Richtung des Reibkörpers 1 bewegt und nach Berührung mit der gewünschten Anpresskraft beaufschlagt.

Es ist auch möglich sowohl Sturz- als auch Schräglaufwinkel einzustellen. Hierzu wird beispielsweise zunächst über den Elektromotor 10 der Schwenkhebel 8 soweit verstellt bis der Sturzwinkel α eingestellt ist und im Anschluß daran mit Hilfe des Drehstrommotors 19 die Welle 20 soweit verdreht bis der gewünschte Schräglaufwinkel β eingenommen ist.

Es ist sowohl denkbar zum Antrieb der Spindel einen gesteuert regelbaren Motor als auch zur Verstellung der Welle 20 einen regelbaren Drehstrommotor 19 zu verwenden. Hierdurch lassen sich während des Betriebes entweder der Schräglaufwinkel oder der Sturzwinkel oder aber beide Winkel verstellen. Eine Regelung ermöglicht beispielsweise die Simulation ganz bestimmter vorgegebener gewünschter Fahrprofile für den Schräglauf, wie sie beispielsweise bei Kurvenfahrten mit verändertem Schräglaufwinkel auftreten. Ebenso lassen sich bestimmte Sturzlaufprofile, wie sie beispielsweise bei Fahrwerksymmetrieveränderungen und sonstigen Belastungswechseln mit verändertem Sturz auftreten, simulieren. Durch entsprechende Ausbildung des Antriebs 6 als regelbaren Antrieb ist es außerdem möglich, Geschwindigkeitsregelungen entsprechend einem vorgegebenen Geschwindigkeitsprofil von veränderten Geschwindigkeiten zu simulieren.

Die Einstellung des Sturzwinkels erfolgt bei der Ausführung von Fig. 1 über einen Bereich von + 6° bis- 6°. Es ist aber auch denkbar, die Ausbildung des Sturzwinkels α über einen größeren Winkelbereich, beispielsweise über einen Bereich von + 15° bis - 15° auszubilden. Die Einstellung des Winkelbereichs für den Schräglauf ist der Ausführung von Figur 1 über einen Winkelbereich von + 2° bis -2° gewählt. Es ist aber auch denkbar, den einstellbaren Schräglaufwinkelbereich für den Winkel β über einen größeren Winkelbereich, beispielsweise über einen Bereich von + 10° bis -10° auszubilden.

Zur Bindung des abgeriebenen Gummimaterials ist es denkbar mit Hilfe schematisch nur an einer Stelle dargestellter Talkumdüsen 24 Talkum kontinuierlich auf die Umfangsfläche des Reibkörpers 1 aufzusprühen, so daß das abgeriebene Material sich nicht auf der Umfangsfläche des Reibkörpers festsetzen und somit die Abriebbedingungen möglicherweise verschlechtern kann. Es ist auch denkbar, das abgeriebene Material mit zusätzlichen Absaugeinrichtungen, die nicht dargestellt sind, aus dem Prüfstand abzusaugen. Bei einem Abriebprüfstand mit mehreren Fahrzeugrädern, beispielsweise wie in Fig. 1 und 2 mit sechs gleichzeitig testbaren Fahrzeugrädern, ist es denkbar, die Parameter für Sturzwinkel, Schräglaufwinkel, Laufzeit und Radialkraft für alle Reifen einzeln, unterschiedlich und unabhängig voneinander zu wählen und zu regeln.

Es ist auch denkbar, für die einzelnen Prüfpositionen jeweils die Fahrzeugradaufnahmekörper 22 mit einem eigenständigen zusätzlichen Antrieb und/oder einer gesteuerten Bremseinrichtungen auszubilden, um unterschiedlich geregelte Relativgeschwindigkeiten zur Reibtrommel 1 auch bei identischen Reifen gleichzeitig zu erzeugen.

Zur Regelung der Reibbeschichtung ist es denkbar, zusätzlich eine oder mehrere gleichmäßig über den Umfang verteilt angeordnete Reinigungseinrichtungen bekannter, nicht dargestellter Bauart anzuordnen. Zur Entfernung von Abrieb sind beispielsweise feine, weiche Bürsten, die an die Abriebtrommel radial herangeführt werden, denkbar. Diese können selbst drehbar gelagerte Bürsten sein.

Ebenso ist es denkbar, zur Vergleichmäßigung der Reibbelagoberfläche eine oder mehrere gleichmäßig über den Umfang verteilt angeordnete, nicht dargestellte, bekannte Überarbeitungseinrichtungen anzuordnen. Beispielsweise können antreibbare Schleifmaschinen mit geeignetem Schleifbelag an die Reibbeschichtung heranführbar ausgebildet angeordnet werden. Falls erforderlich, kann durch Drehen der Abriebtrommel mit Hilfe der Schleifmaschinen im Laufe der Lebensdauer einer Reibbeschichtung eine definierte Oberflächenrauheit gleichmäßig über den Umfang der Abriebtrommel reproduziert werden.

### Bezugszeichenliste

- 1.: Reibtrommel
- 2.: Reibbeschichtung
- 3.: Antriebswelle
- 4.: Treibrad
- 5.: Riemen
- 6.: Motor
- 7.: Zentralkörper
- 8.: Schwenkhebel
- 9.: Rahmen
- 10.: Elektromotor
- 11.: Spindelmutter
- 12.: Spindel
- 13.: Schlitten
- 14.: Pneumatikzylinder
- 15.: Kolbenstange
- 16.: Kraftmeßdose
- 17.: Stange
- 18.: Rahmen
- 19.: Drehstrommotor
- 20.: Welle
- 21.: Schwenkbare Lagerplatte
- 22.: Radaufnahme
- 23.: Fahrzeugrad
- 24.: Benutzungsfläche

## Patentansprüche

1. Vorrichtung zur Simulation des ungleichförmigen Abriebs am Laufstreifen eines Fahrzeugreifens, mit drehbar gelagerten Mitteln (22) zur Aufnahme eines Fahrzeugrads (23), das mit seiner Umfangsfläche zur Erzeugung von Abrieb gegen die Umfangsfläche eines rotierend angetriebenen rotationssymmetrischen Reibkörpers (1) mit radial zum Reibkörper gerichteten Kraftelementen gedrückt wird,
- bei der die Drehachse (d) des Fahrzeugrades in ihrer räumlichen Lage aus einer Position parallel zur Drehachse (a) des Reibkörpers um zumindest eine Schwenkachse, die in einer Ebene senkrecht zur Drehachse des Fahrzeugrades liegt, schwenkbar ausgebildet ist,
- bei der Mittel zum gesteuerten Schwenken der Drehachse (d) des Fahrzeugrades um diese Schwenkachse zur Einstellung eines dem Sturz- und/oder Schräglaufwinkels eines Fahrzeugrades entsprechenden Winkels ausgebildet sind,
- wobei der Reibkörper (1) mit einer starren Mantelfläche ausgebildet ist, die mit einer über den Umfang geschlossen permanenten Reibbeschichtung (2) ausgebildet ist.

2. Vorrichtung zur Prüfung von ungleichförmigem Abrieb am Laufstreifen eines Fahrzeugreifens gemäß den Merkmalen von Anspruch 1,
- wobei die Drehachse (d) des Fahrzeugrades (23) in ihrer Winkellage aus einer Position parallel zur Drehachse (a) des Reibkörpers (1), um zumindest zwei zum Aufnahmekörper (22) des Fahrzeugrades (23) körperfeste Schwenkachsen (b, c), die in einer Ebene senkrecht zur Drehachse (d) des Fahrzeugrades (23) liegen, schwenkbar ausgebildet ist,
- wobei der Aufnahmekörper (22) zumindest zum Verschwenken jeweils mit einem steuerbaren Schwenkantrieb (19, 18, 10, 11, 12) unabhängig voneinander zum Schwenken des Fahrzeugrades (23) um die jeweilige Schwenkachse (b, c) in Wirkverbindugn steht,
- so dass das Schwenken des Aufnahmekörpers (22) um die eine Schwenkachse (c) die Simulation des Sturzwinkels des Fahrzeugrades (23) und das Schwenken des Aufnahmekörpers (22) um die andere Schwenkachse (b) die Simulation des Schräglaufwinkels bewirkt.

3. Vorrichtung zur Prüfung von ungleichförmigem Abrieb am Laufstreifen eines Fahrzeugreifens gemäß den Merkmalen von Anspruch 1 oder 2,
- wobei über den Umfang des Reibkörpers (1) mehrere drehbare gelagerte Mittel (22) zur Aufnahme jeweils eines Fahrzeugrads (23)ausgebildet sind, die jeweils mit ihrer Umfangsfläche zur Erzeugung von Abrieb die Umfangsfläche des rotierenden angetriebenen rotationssymmetrischen Reibkörpers (1) mit radial zum Reibkörper gerichteten Kraftelementen gedrückt werden,
- wobei die Drehachse eines zum Prüfen von den Aufnahmemitteln aufgenommenen Fahrzeugrades (23) jeweils in ihrer räumlichen Lage aus einer Position parallel zur Drehachse des Reibkörpers um zumindest eine Schwenkachse in einer Ebene senkrecht zur Drehachse des Fahrzeugrades schwenkbar ausgebildet ist,
- mit Mitteln zum gesteuerten Schwenken der Drehachse (d) jedes aufgenommenen Fahrzeugrades (23) unabhängig voneinander um die jeweilige Schwenkachse senkrecht zur Drehachse des Fahrzeugrades (23) zur Simulation eines Sturz- und/oder eines Schräglaufwinkels.

4. Vorrichtung zur Prüfung von ungleichförmigem Abrieb am Laufstreifen eines Fahrzeugreifens gemäß den Merkmalen von Anspruch 3,
- wobei Mittel (22) zur gleichzeitigen Aufnahme von sechs Fahrzeugreifen über den Umfang des Reibrades gleichförmig verteilt angeordnet sind.

5. Vorrichtung zur Prüfung von ungleichförmigem Abrieb am Laufstreifen eines Fahrzeugreifens gemäß den Merkmalen von einem oder mehreren der Ansprüche 1 bis 4,
- bei der der Reibkörper (1) mit aufgestampftem oder aufgegossenem Reibmaterial permament beschichtet ist.

6. Vorrichtung zur Prüfung von ungleichförmigem Abrieb am Laufstreifen eines Fahrzeugreifens gemäß den Merkmalen von einem oder mehreren der Ansprüche 1 bis 5,
- wobei das Reibmaterial Schmirgelleinen oder Schleifsteinmaterial ist.

7. Vorrichtung zur Prüfung von ungleichförmigem Abrieb am Laufstreifen eines Fahrzeugreifens gemäß den Merkmalen von Anspruch 6,
- wobei das Schleifsteinmaterial im wesentlichen aus in einer Gießharzmatrix eingebettetem gebrochenem Korund ausgebildet ist.

8. Vorrichtung zur Prüfung von ungleichförmigem Abrieb am Laufstreifen eines Fahrzeugreifens gemäß den Merkmalen von einem oder mehreren der Ansprüche 1 bis 7,
- wobei der Reibkörper mit einem mit einem Reibbelag dauerhaft beschichteten Mantel aus Stahl ausgebildet ist.

9. Vorrichtung zur Prüfung von ungleichförmigem Abreib am Laufstreifen eines Fahrzeugreifens gemäß den Merkmalen von einem oder mehreren der vorangegangenen Ansprüche,
- wobei die Reibbeschichtung (2) eine radiale Dicke von 8 bis 12 mm aufweist.

10. Vorrichtung zur Prüfung von ungleichförmigem Abrieb am Laufstreifen eines Fahrzeugreifens gemäß den Merkmalen von Anspruch 2,
- wobei der Schwenkantrieb zum Schwenken des Fahrzeugrades (23) um die Schwenkachse (c) zur Einstellung des Fahrzeugsturzes während der Simulation regelbar ausgebildet ist.

11. Vorrichtung zur Prüfung von ungleichförmigem Abrieb am Laufstreifen eines Fahrzeugreifens gemäß den Merkmalen von Anspruch 2,
- wobei der Schwenkantrieb zum Schwenken des Fahrzeugrades (23) um die Schwenkachse (b) zur Simulation des Schräglaufs während der Simulation regelbar ausgebildet ist.

12. Vorrichtung zur Prüfung von ungleichförmigem Abrieb am Laufstreifen eines Fahrzeugreifens gemäß den Merkmalen von einem oder mehreren der vorangegangenen Ansprüche,
- wobei die Rotationsgeschwindigkeit des rotationssymmetrischen Reibkörpers (1) während der Simulation regelbar ist.

## Claims

1. Apparatus for simulating the non-uniform wear on the tread strip of a vehicle tyre, said apparatus having rotatably mounted means (22) for receiving a vehicle wheel (23), which is pressed with its circumferential face, to produce wear, against the circumferential face of a rotatingly driven, rotationally symmetrical friction body (1) with elements of force directed towards the friction body,
- wherein the axis of rotation (d) of the vehicle wheel is adapted to be pivotable in respect of its orientation from a position parallel to the axis of rotation (a) of the friction body around at least one pivotal axis, which lies in a plane perpendicular to the axis of rotation of the vehicle wheel, and
- wherein means for the controlled pivotal movement of the axis of rotation (d) of the vehicle wheel about this pivotal axis are provided to set an angle corresponding to the camber angle and/or inclined travel angle of a vehicle wheel,
- the friction body (1) being provided with a rigid surface which is provided with a permanent friction coating (2) extending continuously over the circumference.

2. Apparatus for examining non-uniform wear on the tread strip of a vehicle tyre in accordance with the features of claim 1,
- wherein the axis of rotation (d) of the vehicle wheel (23) is adapted to be pivotable in respect of its angular position from a position parallel to the axis of rotation (a) of the friction body (1) about at least two pivotal axes (b, c), which are fixed with respect to the receiving body (22) of the vehicle wheel (23) and lie in a plane perpendicular to the axis of rotation (d) of the vehicle wheel (23), and
- wherein the receiving body (22) is in operative connection, at least for the pivotal movement, with a respective controllable pivotal drive (19, 18, 10, 11, 12) independently of one another to pivot the vehicle wheel (23) about the respective pivotal axis (b, c),
- so that the pivotal movement of the receiving body (22) about the one pivotal axis (c) effects the simulation of the camber angle of the vehicle wheel (23), and the pivotal movement of the receiving body (22) about the other pivotal axis (b) effects the simulation of the inclined travel angle.

3. Apparatus for examining non-uniform wear on the tread strip of a vehicle tyre in accordance with the features of claim 1 or 2,
- wherein a plurality of rotatably mounted means (22) are provided over the circumference of the friction body (1) in order for each to receive a respective vehicle wheel (23), which wheels are each pressed with their circumferential face, to produce wear, against the circumferential face of the rotatingly driven, rotationally symmetrical friction body (1) with elements of force directed radially relative to the friction body, and
- wherein the axis of rotation of a vehicle wheel (23), received by the receiving means for examination purposes, is adapted to be pivotable in respect of its orientation from a position parallel to the axis of rotation of the friction body about at least one pivotal axis in a plane perpendicular to the axis of rotation of the vehicle wheel,
- said apparatus having means for the controlled pivotal movement of the axis of rotation (d) of each received vehicle wheel (23) independently of one another about the respective pivotal axis perpendicular to the axis of rotation of the vehicle wheel (23) for the simulation of a camber angle and/or an inclined travel angle.

4. Apparatus for examining non-uniform wear on the tread strip of a vehicle tyre in accordance with the features of claim 3,
- wherein means (22) for simultaneously receiving six vehicle tyres are disposed in a uniform distribution over the circumference of the friction body.

5. Apparatus for examining non-uniform wear on the tread strip of a vehicle tyre in accordance with the features of one or more of claims 1 to 4,
- wherein the friction body (1) is permanently coated with stamped-on or cast-on friction material.

6. Apparatus for examining non-uniform wear on the tread strip of a vehicle tyre in accordance with the features of one or more of claims 1 to 5,
- wherein the friction material is emery cloth or grindstone material.

7. Apparatus for examining non-uniform wear on the tread strip of a vehicle tyre in accordance with the features of claim 6,
- wherein the grindstone material is substantially formed from crushed corundum embedded in a casting resin matrix.

8. Apparatus for examining non-uniform wear on the tread strip of a vehicle tyre in accordance with the features of one or more of claims 1 to 7,
- wherein the friction body is formed from steel with a surface permanently coated with a friction lining.

9. Apparatus for examining non-uniform wear on the tread strip of a vehicle tyre in accordance with the features of one or more of the preceding claims,
- wherein the friction coating (2) has a radial thickness of 8 to 12 mm.

10. Apparatus for examining non-uniform wear on the tread strip of a vehicle tyre in accordance with the features of claim 2,
- wherein the pivotal drive for pivoting the vehicle wheel (23) about the pivotal axis (c) is adapted to be regulatable for setting the vehicle camber during the simulation.

11. Apparatus for examining non-uniform wear on the tread strip of a vehicle tyre in accordance with the features of claim 2,
- wherein the pivotal drive for pivoting the vehicle wheel (23) about the pivotal axis (b) is adapted to be regulatable for simulating the inclined travel during the simulation.

12. Apparatus for examining non-uniform wear on the tread strip of a vehicle tyre in accordance with the features of one or more of the preceding claims,
- wherein the speed of rotation of the rotationally symmetrical friction body (1) is regulatable during the simulation.

## Revendications

1. Dispositif de simulation de l'usure non uniforme de la bande de roulement d'un pneumatique de véhicule, comprenant des moyens (22) logés de façon mobile autour d'un axe pour recevoir une roue (23) de véhicule, laquelle roue de véhicule est pressée par sa surface circonférentielle d'un corps de frottement (1) entraîné de façon rotative et symétrique en rotation et qui comprend des éléments de force dirigés de façon radiale par rapport au corps de frottement, la surface circonférentielle de la roue du véhicule étant disposée pour produire de l'usure,
- dans lequel l'axe de rotation (d) de la roue du véhicule, dans sa position dans l'espace à partir d'une position parallèle à l'axe de rotation (a) du corps de frottement, est configuré de façon à pouvoir pivoter au moins autour d'un axe pivotant qui est placé dans un plan perpendiculaire à l'axe de rotation de la roue du véhicule,
- dans lequel des moyens sont configurés pour le mouvement pivotant contrôlé de l'axe de rotation (d) de la roue du véhicule, autour de cet axe pivotant, pour le réglage d'un angle correspondant à l'angle de carrossage et/ou à l'angle de dérive d'une roue de véhicule,
- où le corps de frottement (1) est configuré en ayant une surface extérieure fixe qui est configurée en ayant un revêtement de frottement (2) permanent et fermé sur la circonférence.

2. Dispositif de contrôle de l'usure non uniforme de la bande de roulement d'un pneumatique de véhicule selon les caractéristiques de la revendication 1,
- où l'axe de rotation (d) de la roue (23) du véhicule, dans sa position angulaire à partir d'une position parallèle à l'axe de rotation (a) du corps de frottement (1), est configuré de façon à pouvoir pivoter au moins autour de deux axes pivotants (b, c) solidaires du corps, servant au corps de logement (22) de la roue (23) du véhicule, lesquels axes pivotants sont placés dans un plan perpendiculaire à l'axe de rotation (d) de la roue (23) du véhicule,
- où le corps de logement (22), au moins pour le mouvement pivotant, est en liaison active à chaque fois avec un entraînement pivotant réglable (19, 18, 10, 11, 12), lesquels entraînements pivotants réglables sont indépendants l'un de l'autre et servent au mouvement pivotant de la roue (23) du véhicule autour de l'axe pivotant respectif (b, c),
- de sorte que le mouvement pivotant du corps de logement (22) autour de l'axe pivotant (c) déclenche la simulation de l'angle de carrossage de la roue (23) du véhicule, le mouvement pivotant du corps de logement (22) autour de l'autre axe pivotant (b) déclenchant la simulation de l'angle de dérive.

3. Dispositif de contrôle de l'usure non uniforme de la bande de roulement d'un pneumatique de véhicule selon les caractéristiques de la revendication 1 ou 2,
- où plusieurs moyens (22) logés de façon mobile autour d'un axe sont configurés sur la circonférence du corps de frottement (1), à chaque fois pour loger une roue (23) d'un véhicule, lesquels moyens ont à chaque fois leur surface circonférentielle, servant à produire de l'usure, pressée contre la surface circonférentielle du corps de frottement (1) entraîné de façon rotative et symétrique en rotation et qui comprend des éléments de force dirigés de façon radiale par rapport au corps de frottement,
- où l'axe de rotation d'une roue (23) de véhicule logée par les moyens de logement, à chaque fois dans sa position dans l'espace à partir d'une position parallèle à l'axe de rotation du corps de frottement, est configuré de façon à pouvoir pivoter au moins autour d'un axe de rotation qui est placé dans un plan perpendiculaire à l'axe de rotation de la roue du véhicule,
- comprenant des moyens indépendants l'un de l'autre et servant au mouvement pivotant réglé de l'axe de rotation (d) de chaque roue logée (23) du véhicule, autour de l'axe pivotant respectif, perpendiculaire à l'axe de rotation de la roue (23) du véhicule, pour la simulation d'un angle de carrossage et/ou d'un angle de dérive.

4. Dispositif de contrôle de l'usure non uniforme de la bande de roulement d'un pneumatique de véhicule selon les caractéristiques de la revendication 3,
- où les moyens (22), servant au logement simultané de six pneumatiques de véhicules, sont disposés en étant répartis de façon régulière sur la circonférence de la roue de frottement.

5. Dispositif de contrôle de l'usure non uniforme de la bande de roulement d'un pneumatique de véhicule selon les caractéristiques de l'une quelconque ou de plusieurs des revendications 1 à 4,
- dans lequel le corps de frottement (1) est recouvert en permanence d'un matériau de frottement appliqué par moulage ou par coulée.

6. Dispositif de contrôle de l'usure non uniforme de la bande de roulement d'un pneumatique de véhicule selon les caractéristiques de l'une quelconque ou de plusieurs des revendications 1 à 5,
- où le matériau de frottement est une toile émeri ou un matériau abrasif.

7. Dispositif de contrôle de l'usure non uniforme de la bande de roulement d'un pneumatique de véhicule selon les caractéristiques de la revendication 6,
- où le matériau abrasif se compose essentiellement de corindon broyé et enrobé dans une matrice de résine moulée.

8. Dispositif de contrôle de l'usure non uniforme de la bande de roulement d'un pneumatique de véhicule selon les caractéristiques de l'une quelconque où de plusieurs des revendications 1 à 7,
- où le corps de frottement est composé d'une enveloppe en acier recouverte de façon durable d'une garniture de frottement.

9. Dispositif de contrôle de l'usure non uniforme de la bande de roulement d'un pneumatique de véhicule selon les caractéristiques de l'une quelconque ou de plusieurs des revendications précédentes,
- où lé revêtement de frottement (2) a une épaisseur radiale comprise entre 8 mm et 12 mm.

10. Dispositif de contrôle de l'usure non uniforme de la bande de roulement d'un pneumatique de véhicule selon les caractéristiques de la revendication 2,
- où l'entraînement pivotant permettant de faire pivoter la roue (23) du véhicule autour de l'axe pivotant (c) est configuré de façon réqlable, pour le réglage du carrossage du véhicule au cours de la simulation.

11. Dispositif de contrôle de l'usure non uniforme de la bande de roulement d'un pneumatique de véhicule selon les caractéristiques de la revendication 2,
- où l'entraînement pivotant pour faire pivoter la roue (23) du véhicule autour de l'axe pivotant (b) est configuré de façon réglable pour la simulation de la dérive au cours de la simulation.

12. Dispositif de contrôle de l'usure non uniforme de la bande de roulement d'un pneumatique de véhicule selon les caractéristiques de l'une quelconque ou de plusieurs des revendications précédentes,
- où la vitesse de rotation du corps de frottement (1) symétrique en rotation est réglable au cours de la simulation.
